(19) Europäisches Patentamt

European Patent Office

Office européen des brevets

(11) **EP 0 551 115 B1**

(12) **EUROPEAN PATENT SPECIFICATION**

(45) Date of publication and mention
of the grant of the patent:
**22.04.1998 Bulletin 1998/17**

(51) Int Cl.6: **G01L 5/04**, G01L 5/10

(21) Application number: **93100187.9**

(22) Date of filing: **07.01.1993**

(54) **Device for measuring the tensile stress of an optical fiber or corresponding wire by means of an acoustic surge**

**Vorrichtung zur Messung der Zugspannung einer Lichtleitfaser oder eines entsprechenden Drahtes mittels akustischer Auslenkung**

**Dispositif pour mesurer des etforts de tension d'une fibre optique ou d'un fil correspondent par moyen d'excursion acoustique**

(84) Designated Contracting States:
**AT BE CH DE DK ES FR GB GR IE IT LI LU MC NL PT SE**

(30) Priority: **09.01.1992 FI 920083**

(43) Date of publication of application:
**14.07.1993 Bulletin 1993/28**

(73) Proprietor: **SOUNDEK OY**
**SF-02150 Espoo (FI)**

(72) Inventor: **Luukkala, Mauri**
**SF-02170 Espoo (FI)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(56) References cited:
| | |
|---|---|
| **EP-A- 0 100 394** | **EP-A- 0 477 942** |
| **WO-A-89/08733** | **DE-A- 3 203 815** |
| **FR-A- 2 504 898** | **GB-A- 2 082 323** |
| **US-A- 4 441 367** | **US-A- 4 833 928** |

## Description

The invention relates to a measuring device for measuring the tensile stress of an optic fiber or a corresponding optic wire.

An optic fiber is a thin glass fiber, whose diameter is ca. 150 micrometers. The optic fiber is used for replacing a copper conductor in telecommunications, since the data transmission capacity of the optic fiber is much higher than that of a copper conductor. Furthermore, there is no shortage of the raw material of the optic fiber, as is the case with copper.

An Optic fiber is prepared in a so-called draw tower, which is a large-sized tower with a height of ca. 6-7 m, at the upper end of which molten glass is drawn downwards into a thin fiber. When the hot fiber goes downwards, it cools, whereafter the fiber at the lower end of the tower may be coated with the desired polymer in a special coating vat. After the coating, the fiber is transported after a tension meter onto a special roller, on which it is wound into a roll. It is known that bare fiber cannot be bent, since it breaks apart. After the polymer coating, the fiber is very resistant to bending. Nowadays, the draw rate is generally ca. 2-4 m/s, and among other things of the drawing rate of the fiber and partly the thickness of the fiber are adjusted with a tension meter. However, the tension measurement does now not occur until the coating, since a bare fiber cannot be contacted. A possible tension measurement occurring after the coating is yet too late, and it provides an incorrect result of the tension of the bare fiber.

There is naturally a desire to increase the draw rate of the fiber, but from the point of view of the process control, the tension of the fiber should be measured without contacting the fiber. A current fiber tension meter is a spring-loaded roller, via which an uncoated fiber advances. The rate of the loading indicates the fiber tension. However, such a contacting roller easily breaks the bare fiber, and it is in fact only used at very slow draw speeds when starting up the drawing machine.

Relative to prior art, an electro-optic meter may be mentioned, which on the basis of the double refraction of light measures the tensile stress of the fiber. The glass-fiber material is often quartz, in which occurs a double refraction of light comparative to the tension. A problem relative to this meter is the fact that the light has to be accurately focused on a movable glass-fiber of a strength of ca. 150 micrometers, whereafter the double refraction has to be measured.

In the publications FI-79410 and US-4,833,928 has been described a method, in which the tension of a movable thin film or membrane, in particular, of a paper web is measured by measuring the speed of the membrane wave acousto-optically. A loudspeaker is brought near the membrane, by means of which a mechanical surge is brought about onto the membrane, which surge advances in the direction of the membrane tension. The advancing speed of the surge is measured by optically measuring the vibration of the membrane at two different points on the membrane. When the wave speed and the basis weight of the membrane are known, the tension may be calculated. However, such a meter cannot be used for measuring the tensile stress of a thin transparent glass-fiber. Two physical wave movements are concerned, which are described by two different equations, since the phenomena are different phenomena. The wave movement of a thin wire is physically different as compared to the wave movement of a planar membrane.

In the patent US-5,079,433 is described a device, which measures the fiber tension by causing a stagnant wave movement by means of pressurized air and by then measuring the basic frequency of the stagnant wave, on the basis of which the fiber tension may be calculated. In the device, very complex calculative arrangements have to be performed, such as doublings of the frequency, etc. The stagnant wave movement and its frequencies also depend on the fiber length to be measured or the fixing points of the fiber, which are determined by the dimensions of the drawing machine used.

In the EP patent publication 0226396 is described a measuring method, wherein the fiber tension is measured without a contact by electro-optical means, and the vibration frequency of the fiber is indicated by a so-called CCD-camera by causing a fiber shadow onto the surface of the CCD-camera. Also in this measuring method, a stagnant wave is caused along the entire fiber length, and a so-called basic frequency is searched for by means of the Fourier analysis, from which the speed of the wave movement is calculated.

A still further prior art arrangement for tension measurement is known from document DE-A1-32 03 815 which teaches to strike a rope by means of, for example, a hammer, thereby causing a deflection in the rope or wire, on the basis of which the tension of the rope may be derived.

However, due to the materials used in this prior art arrangement, contacting the rope whose tension is to be measured is feasible. However, deflecting an optic fiber in a contacting manner by using a hammer or the like can not be achieved since an optic fiber breaks apart when being hit.

Moreover, the deflection achieved according to this known arrangement is a single deflection, lasting for a short period of time only, while even a repeated deflection of the rope would cause additional waves deteriorating the measurement due to occurring interference and/or superposition phenomena. Such phenomena are due to the fact that the rope, which is used for transmission of forces, is fixed at both ends, such that deflections of the rope are reflected back from the fixed ends thereof.

An object of the invention is to provide an improvement on the currently known measuring devices for measuring the tensile stress of an optic fiber or a corresponding optic wire.

This object is achieved by a measuring device for measuring the tensile stress of an optic fiber or a corresponding optic wire as defined in claim 1.

By means of the inventive measuring device, several important advantages are obtained in comparison with the measuring devices known previously. The inventive acousto-optic measuring device measures the fiber tensile stress by means of wire waves, when the fiber mass per length unit is known. By means of the measuring device, the tensile stress of the fiber may be measured without contacting it such that also the advancing speed of the fiber is compensated for. Owing to this, the invention possibilitates an increase in the fiber draw speed max. 10-20 m/s or even higher than that, since the drawing speed may be measured reliably and sufficiently accurately. The principle of the inventive measuring device is the fact that an advancing vibration is produced into the fiber, whose advancing speed v is measured. When the mass of the fiber per length unit is known, a fiber tensile stress T is obtained such that it is simply calculated from the formula (1)

$$T = v^2 . M \qquad (1)$$

wherein M equals to the fiber mass per length unit. Thus, in the inventive measuring device is first produced into a bare fiber a suitable advancing acoustic surge, whose advancing speed v is measured in a certain manner without contacting the fiber.

When the fiber is drawn downwards in the draw tower, the fiber is bare within a distance of several meters before the fiber advances into the coating vat. In this area, a loudspeaker, especially an enclosed loudspeaker, may be installed such that there is a narrow gap in the front wall of the enclosure, from which gap the sound wave surge may be discharged. The gap is parallel with the fiber such that the fiber is caused, due to the surge, to enter into a linearly polarized vibration similar to that of a guitar string, when it is plucked. The preferred vibration frequency of the surge for tension measurement purposes is in practise ca. 300 Hz. However, the invention is not especially accurately critical relative to the vibration frequency used. The advancing speed of the fiber vibration is measured optically at least at two different points, the distance therebetween being known.

The invention is described in detail with reference to a certain preferred embodiment of the invention shown in the figures of the accompanying drawings, to which embodiment the invention is yet not solely to be limited.

Fig. 1 shows a certain preferred embodiment of an inventive measuring device as a schematic view seen from the side.

Fig. 2 shows the measuring device of Fig. 1 seen from the front.

Fig. 3 shows as an axonometric view the vibration of the fiber in front of a location-sensitive electro-optic indicator.

Fig. 4 shows as a graphic representation the measured advancing speeds of the wire wave for an optic fiber as a function of the tensile stress T.

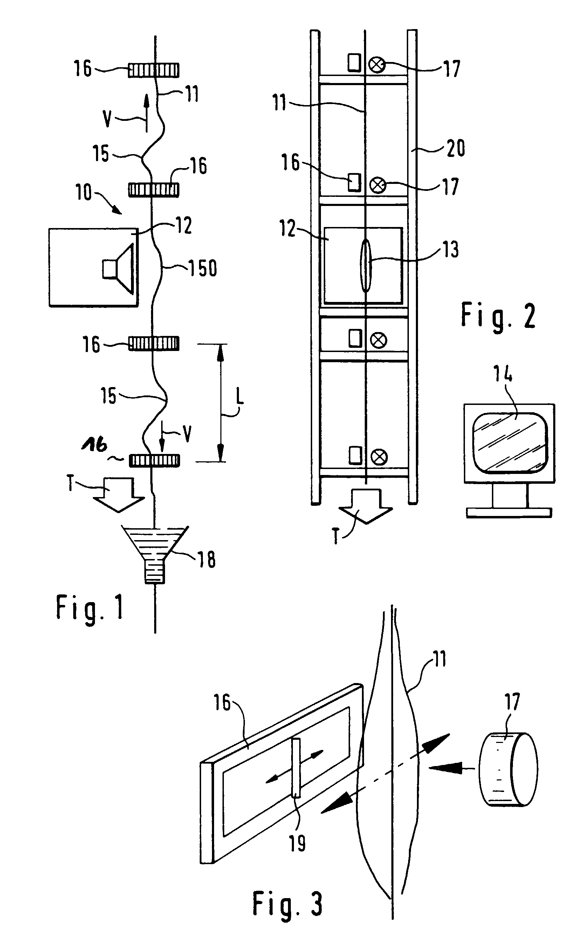

In the embodiment of Fig. 1-3, the measuring device is generally indicated by a reference number 10. An optic fiber 11 under tension is caused to come into a linearly polarized vibration movement by means of an acoustic surge, which is produced by a suitable device, such as a loudspeaker 12, preferably an enclosed loudspeaker. There is a narrow gap 13 in the direction of the fiber 11 in front of the loudspeaker 12. An electronic surge signal, controlled e.g. by means of a computer 14 at a frequency of ca. 300 Hz, is led to the loudspeaker 12, which surge signal is modified into an acoustic surge. The bend 150 produced in the fiber 11 starts to advance along the fiber in both directions as a wire wave 15. The wire wave 15 advances the faster, the higher the tension in the fiber 11 is. The speed of the wire wave 15 is measured with at least two optic location-sensitive indicators 16, the distance L therebetween being known. The indicators 16 measure the location of a shadow 19 of the illuminated fiber 11 and its vibrations. The illumination of the fiber 11 occurs by means of an illuminator 17, which may be e.g. a LED-lamp. The illumination of the fiber 11 causes a shadow 19 onto the surface of an indicator, such as a camera 16, and the location of the shadow 19 may then be measured in real-time by means of the computer 14 connected to the camera 16. The location-sensitive indicator 16 is a so-called line-like semiconductor indicator, in which the location of the shadow 19 may be measured by measuring the voltage produced by the indicator 16. The indicator 16 is thus a certain kind of a location-sensitive linear camera that emits a signal, which is comparative to the location 19 of the shadow 19 of the fiber 11 in front of the camera 16.

When the fiber 11 vibrates, also its shadow 19 naturally vibrates. Since it is possible to measure the vibration with two indicators 16 located at a known distance L from each other, the speed v of the wave movement may be measured and calculated. Fig. 3 shows in an illustrative manner the transverse vibration of the fiber 11 in front of the camera. It is important to observe that the loudspeaker 12 causes the fiber 11 to vibrate as a so-called linearly polarized vibration. This means that the fiber vibrates on its own level, and not e.g. on a circularly polarized level. Then, e.g. the optic measurement of the diameter of the fiber 11 is not disturbed, since the vibration occurs in the direction of the measurement.

When the wire wave 15 advances along the fiber 11, the wire wave 15 naturally contacts the upper and lower end of the fiber 11 and is reflected back from these points, causing additional waves to the fiber 11, whereby these additional waves may also be observed by the cameras 16 as additional signals. However, in the draw tower of the fiber 11, the lower end of the fiber enters a coating vat 18, wherein molten plastic efficiently dampens the vibrations. There is on its part in the upper end of the draw tower molten glass, which also efficiently dampens the vibrations. In this way, the reflections of the upper and lower end are considerably dampened, and they do not thus very much disturb the measurement. It is also to be observed that a stagnant wave is not caused to enter into the fiber 11, but an advancing wave movement, whose advancing speed v is relatively easy to measure from the time difference of the vibrations by means of two successive location-sensitive cameras 16, the distance L therebetween being known.

Fig. 3 thus describes a situation, in which the fiber 11 vibrating in front of the camera 16 is illuminated e.g. by means of a LED-lamp 17, whereby the movement of the shadow 19 of the fiber focusing on the camera 16 may be electronically monitored. The electronic signal provided by the camera 16 is transmitted to the computer 14, in which it may be analyzed such that the speed v of the wave movement may be calculated from a formula (1) by means of conventional algorithms of the the computer 14.

The drawing speed of the optic fiber is generally ca. 2-4 m/s. On the other hand, it is known that the speed of the wire wave 15 in the drawing occurrence is ca. 100 m/s in connection with draw tensions used generally. In the measurement accuracy, this means an error of ca. 2-4% due to the inherent movement of the fiber 11. On the other hand, the measurement accuracy is of the order 4-5% due to other factors, because of which the inherent speed of the fiber 11 is just within the limits of the measurement accuracy, and it is therefore not very detrimental. The inherent speed of the fiber 11 may be compensated for, when so needed, by means of two pairs of cameras 16, one of which is located "upstream" and the other one "downstream" relative to the loudspeaker 12. The speed compensation is of a great importance, since the drawing speed of the fiber is increased even up to 10-20 m/s or even higher than that.

When the wire wave 15 starts to advance, one wire wave 15 advances downstream along with the speed of the fibre and the other wire wave advances upstream relative to the movement of the fiber 11. The inherent movement of the fiber 11 thus produces an error for both wire waves 15, which are of an opposite sign. Then, the inherent movement of the fiber may be eliminated by calculating the average of the speeds of both wire waves 15 by means of the computer 14 connected to the cameras 16.

The effect of the error of the inherent speed of the fiber 11 may be eliminated also calculatively, in case the speed of the fiber 11 is otherwise known, by simply entering the speed value into the computer 14, which takes into account its effect on the tension value. For calculating the tension, the mass of the fiber 11 per length unit has to be known, which may be calculated by optically measuring the diameter of the fiber 11, when the total density of the fiber material is otherwise known. All fiber draw-towers include an optic fiber-diameter meter, which often also uses a so-called CCD-camera. Since the vibration of the fiber 11 is linearly polarized, the polarization of the vibration may be arranged such that it does not disturb the diameter measurement of the fiber 11.

The vibration of the fiber 11 may also be detrimental to the drawing and coating of the fiber 11 itself such that it causes nonuniformity to the fiber. However, the amplitude of the vibration is in practise of the order of the diameter of the fiber 11, which, on top of all, is very rapidly dampened in the polymer coating vat 18 and in the molten glass of the upper end of the draw tower. Due to this, the detrimental effect of the vibration of the fiber 11 is in fact very minimal.

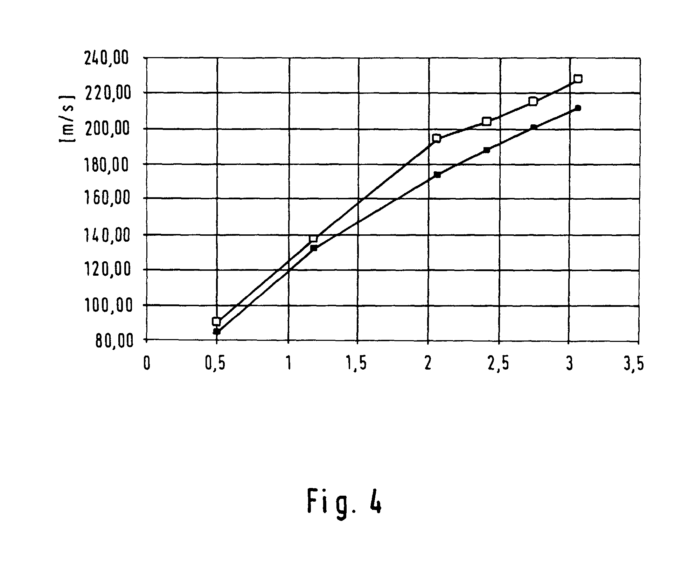

Fig. 4 shows practical measurement results, on the basis of which may be estimated as the speed of the wire wave 15 advancing in the fiber 11 ca. 80-140 m/s at typical draw tensions. The inventive equipment may preferably be located in a frame 20 according to Fig. 2.

In practise, the distance L of the indicators 16 from each other is ca. 50 cm. The tension is thus measured along a relatively short distance, of which it is known that the tension is constant. Along the entire length of the fiber 11 occurs in the drawing situation a considerable temperature gradient, which causes the fact that even the tension is not constant along the length of the fiber 11. For example for this reason, a stagnant-wave tension meter measuring along the entire length cannot provide a reliable result.

## Claims

1. A measuring device (10) for measuring the tensile stress of an optic fiber (11) or a corresponding optic wire

   **characterized in that**

   the measuring device (10) is provided with:
   a device (12) for producing into the optic fiber (11) or the corresponding optic wire
   a vibration surge (150)
   vibrating at a certain preselected frequency in the range of audible sound, which surge advances as a linearly polarized string wave (15) in the optic fiber or the corresponding optic wire,
   and
   an illuminator (17) for illuminating the optic fiber (11) or the corresponding optic wire such that
   a shadow (19) or a view of the vibrating optic fiber or corresponding optic wire is cast to at least two successive optic location-sensitive indicators (16),

arranged with a known distance (L) therebetween, and connected to a computing device (14),

which computing device comprises means for measuring a time difference, for measuring the advancing speed (v) of the wave (15) in the optic fiber or the corresponding optic wire on the basis of the time difference of electronic signals obtained by said indicators (16),

which advancing speed (v) is input to the computing device (14), which computing device calculates the tensile stress (T) of the optic fiber (11) or the corresponding optic wire on the basis of the equation $T = v^2 * M$, when the fiber mass (M) per unit length is known.

2. A measuring device according to claim 1,
**characterized in that**
the optic indicators (16) are analog location-sensitive indicators.

3. A measuring device according to claim 1 or 2,
**characterized in that**
the device (12) for producing the vibration surge (150) into the optic fiber (11) or the corresponding wire is
a loudspeaker,
in front of which is located a narrow gap (13),
which is parallel with the optic fiber (11) or the corresponding optic wire
such that
the vibration surge (150) advancing in the optic fiber (11) or the corresponding optic wire becomes linearly polarized.

4. A measuring device according to any of the claims 1 to 3,
**characterized by**
two pairs of indicators (16)
for measuring the speed of the wave (15) in the optic fiber or the corresponding optic wire,
both in the drawing speed of the fiber (11) or the corresponding optic wire and in the opposite direction thereto,
and in that
said computing device (14) calculates the average of the speeds thus obtained, to thereby eliminate the effect of the inherent drawing speed of the optic fiber (11) on the measurement.

5. A measuring device according to any of the claims 1 to 3,
**characterized by**

two pairs of indicators (16)

for measuring the speed of the wave (15) in the optic fiber or the corresponding optic wire,

both in the drawing speed of the fiber (11) or the corresponding optic wire and in the opposite direction thereto, and in that
the speed of the fiber (11) or the corresponding optic wire is entered to said computing device (14),

which thereby calculatively compensates the effect of the inherent drawing speed of the optic fiber (11) or the corresponding wire on the measurement.

6. A measuring device according to any of the claims 1 to 5,
**characterized in that**
the measuring device (10) is positioned in a frame (20).


**Patentansprüche**

1. Meßvorrichtung (10) zur Messung der Zugspannung einer Lichtleitfaser (11) oder eines entsprechenden Lichtleiters,
**dadurch gekennzeichnet, daß**
die Meßvorrichtung (10) mit

einer Einrichtung (12) zur Erzeugung einer Schwingungsauslenkung (150) in der Lichtleitfaser (11) oder dem entsprechenden Lichtleiter versehen ist, wobei die Schwingungsauslenkung mit einer gewissen vorab gewählten Frequenz im Bereich hörbaren Schalls schwingt und sich als linear polarisierte Saitenwelle (15) auf der Lichtleitfaser oder dem entsprechenden Lichtleiter ausbreitet, und mit
einer Beleuchtungseinrichtung (17) zur derartigen Beleuchtung der Lichtleitfaser (11) oder des entsprechenden Lichtleiters versehen ist, daß ein Schatten (19) oder eine Ansicht der schwingenden Lichtleitfaser oder des entsprechenden Lichtleiters auf zumindest zwei aufeinanderfolgende optisch ortsempfindliche Anzeigeeinrichtungen (16) fällt, welche in einem bekannten Abstand (L) voneinander angeordnet und an eine Recheneinrichtung (14) angeschlossen sind, wobei die Recheneinrichtung Mittel zur Messung einer Zeitdifferenz umfaßt, um die Ausbreitungsgeschwindigkeit (v) der Welle (15) auf der Lichtleitfaser oder dem entsprechenden Lichtleiter beruhend auf der Zeitdifferenz von mittels der Anzeigeeinrichtungen (16) erhaltener elektronischer Signale zu messen,
wobei die Ausbreitungsgeschwindigkeit (v) der Recheneinrichtung (14) zugeführt wird, wobei die Recheneinrichtung die Zugspannung (T) der Lichtleitfaser (11) oder des entsprechenden Lichtleiters auf der Grundlage der Gleichung T = $v^2$ * M berechnet, wenn die Fasermasse (M) pro Längeneinheit bekannt ist.

2. Meßvorrichtung nach Anspruch 1,
 **dadurch gekennzeichnet, daß**
 die optischen Anzeigeeinrichtungen (16) analoge ortsempfindliche Anzeigeeinrichtungen sind.

3. Meßvorrichtung nach Anspruch 1 oder 2,
 **dadurch gekennzeichnet, daß**
 es sich bei der Einrichtung (12) zur Erzeugung der Schwingungsauslenkung (150) auf der Lichtleitfaser (11) oder dem entsprechenden Lichtleiter um einen Lautsprecher handelt, vor dem ein zur Lichtleitfaser (11) oder dem entsprechenden Lichtleiter paralleler, schmaler Spalt (13) angeordnet ist, so daß die sich auf der Lichtleitfaser (11) oder dem entsprechenden Lichtleiter ausbreitende Schwingungsauslenkung (150) linear polarisiert ist.

4. Meßvorrichtung nach einem der Ansprüche 1 bis 3,
 **gekennzeichnet durch**
 zwei Paare von Anzeigeeinrichtungen (16) zur Messung der Geschwindigkeit der Welle (15) auf der Lichtleitfaser oder dem entsprechenden Lichtleiter, die jeweils in Richtung der Ziehgeschwindigkeit der Faser (11) oder des entsprechenden Lichtleiters und in der dazu entgegengesetzten Richtung angeordnet sind,
 und dadurch, daß
 die Recheneinrichtung (14) den Mittelwert der so erhaltenen Geschwindigkeiten berechnet, um dadurch den Einfluß der inhärenten Ziehgeschwindigkeit der Lichtleitfaser (11) auf die Messung zu beseitigen.

5. Meßvorrichtung nach einem der Ansprüche 1 bis 3,
 **gekennzeichnet durch**
 zwei Paare von Anzeigeeinrichtungen (16) zur Messung der Geschwindigkeit der Welle (15) auf der Lichtleitfaser oder dem entsprechenden Lichtleiter, die jeweils in Richtung der Ziehgeschwindigkeit der Faser (11) oder des entsprechenden Lichtleiters und in der dazu entgegengesetzten Richtung angeordnet sind,
 und dadurch, daß
 die Geschwindigkeit der Faser (11) oder des entsprechenden Lichtleiters in die Recheneinrichtung (14) eingegeben wird, welche dadurch rechnerisch den Einfluß der inhärenten Ziehgeschwindigkeit der Lichtleitfaser (11) oder des entsprechenden Lichtleiters auf die Messung beseitigt.

6. Meßvorrichtung nach einem der vorhergehenden Ansprüche 1 bis 5,

**dadurch gekennzeichnet, daß**
die Meßvorrichtung (10) in einem Rahmen (20) angeordnet ist.

## Revendications

1. Dispositif de mesure (10) destiné à mesurer les contraintes de traction ou la résistance à la rupture d'une fibre optique (11) ou d'un fil optique correspondant
 **caractérisé en ce que**
 le dispositif de mesure (10) est muni :

 d'un dispositif (12) pour produire dans la fibre optique (11) ou le fil optique correspondant une vague vibratoire (150)
 vibrant à une certaine fréquence présélectionnée dans la plage de son audible, laquelle vague progresse sous la forme d'une chaîne d'onde (15) polarisée linéairement dans la fibre optique ou dans le fil optique correspondant, et

 un dispositif d'éclairage (17) destiné à éclairer la fibre optique (11) ou le fil optique correspondant de façon à projeter une ombre (19) ou une vue de la fibre optique vibrante ou d'un fil optique correspondant sur
 au moins deux indicateurs optiques successifs sensibles à la position (16),

 disposés à une distance connue (L) entre eux deux, et raccordés à un dispositif de calcul (14),
 lequel dispositif de calcul comprend des moyens pour mesurer l'écart de temps,
 pour mesurer la vitesse d'avance (v) de l'onde (15) dans la fibre optique ou dans le fil optique correspondant en fonction de l'écart de temps des signaux électroniques obtenue par les indicateurs (16),

 laquelle vitesse de progression (v) est entrée dans le dispositif de calcul (14), lequel dispositif de calcul détermine la contrainte de traction aux résistances à la rupture (T) de la fibre optique (11) ou le fil optique correspondant en fonction de l'équation T = $v^2$ * M, lorsque la masse de la fibre (M) par longueur unitaire est connue.

2. Dispositif de mesure selon la revendication 1,
 caractérisé en ce que
 les indicateurs optiques (16) sont des indicateurs analogiques sensibles à la position.

**3.** Dispositif de mesure selon la revendication 1 ou 2, caractérisé en ce que

le dispositif (12) destiné à produire l'onde vibratoire (150) dans la fibre optique (11) ou le fil correspondant est un haut-parleur,

devant lequel est situé un espace étroit (13), qui est parallèle à la fibre optique (11) ou au fil optique correspondant de telle sorte que la vague vibratoire (150) progressant dans la fibre optique (11) ou dans le fil optique correspondant devient polarisé linéairement.

**4.** Dispositif de mesure selon l'une quelconque des revendications 1 à 3, caractérisé par

deux paires d'indicateurs (16)

destinés à mesurer la vitesse de l'onde (15) dans la fibre optique ou le fil optique correspondant,

à la fois dans la vitesse de traction de la fibre (11) ou du fil optique correspondant et dans sa direction opposée et en ce que

le dispositif de calcul (14) détermine la moyenne des vitesses ainsi obtenues pour supprimer ainsi l'effet de la vitesse de traction inhérente de la fibre optique (11) sur la mesure.

**5.** Dispositif de mesure selon l'une quelconque des revendications 1 à 3, caractérisé par

deux paires d'indicateurs (16)

destinés à mesurer la vitesse de l'onde (15) dans la fibre optique ou dans le fil optique correspondant,

à la fois dans la vitesse de traction de la fibre (11) ou dans sa direction opposée et en ce que

la vitesse de la fibre (11) ou du fil optique correspondant est introduite dans le dispositif de calcul (14),

qui compense ainsi par calcul l'effet de la vitesse de traction inhérente de la fibre optique (11) ou du fil correspondant sur la mesure.

**6.** Dispositif de mesure selon l'une quelconque des revendications 1 à 5, caractérisé en ce que

le dispositif de mesure (10) est positionné dans un châssis (20).

Fig. 1

Fig. 2

Fig. 3

Fig. 4